# EUROPÄISCHE PATENTSCHRIFT

(11) **EP 2 018 306 B1**
(45) Veröffentlichungstag und Bekanntmachung des Hinweises auf die Patenterteilung: **17.08.2016**
(21) Anmeldenummer: 07724557.9
(22) Anmeldetag: 25.04.2007
(51) Int. Cl.: B62B 5/04

(54) **FAHRGESTELL FÜR EIN WISCHSYSTEM**
CHASSIS FOR A MOPPING SYSTEM
CHASSIS POUR SYSTEME DE NETTOYAGE

(30) Priorität: 05.05.2006 DE 102006021278
(43) Veröffentlichungstag der Anmeldung: 28.01.2009
(73) Patentinhaber: Leifheit AG, 56377 Nassau (DE)
(72) Erfinder: FISCHER, Klaus-Jürgen, 56379 Holzappel (DE); PÄTZOLD, Dieter, 56377 Nassau (DE)
(74) Vertreter: Bungartz, Klaus Peter
(86) Internationale Anmeldenummer: PCT/EP2007/003627
(87) Internationale Veröffentlichungsnummer: WO 2007/128411

(56) Entgegenhaltungen:
- EP-A- 1 526 058
- DE-A1- 10 065 375
- DE-C1- 19 809 331

## Beschreibung

Die Erfindung betrifft eine Kombination eines Wischsystems mit einem Fahrgestell und mit einer Wischsystemaufnahme zur Aufnahme des Wischsystems nach dem Oberbegriff des Anspruchs 1.

Aus der DE 43 20 454 A1 ist ein fahrbarer Reinigungswagen mit einem Eimer und einer auf diesen Eimer aufgesetzten Vertikalpresse bekannt. Die Vertikalpresse wird durch Betätigung eines Hebels bedient und dient zur Trocknung der Wischbezüge, die zuvor in dem Eimer schwenkend ausgewaschen wurden. Der Reinigungswagen ist auf Lenkrollen gelagert und hat daher den Vorteil, dass er beim Reinigen großer Flächen vom Benutzer ohne großen Kraftaufwand mitgeführt werden kann. Der Reinigungswagen hat den Nachteil, dass er insbesondere bei Tätigung der Vertikalpresse ungewollt und störenderweise wegrollen kann. Dies kann im Extremfall sogar dazu führen, dass der Eimer von dem Reinigungswagen kippt oder dass der gesamte Reinigungswagen umkippt.

Aus der DE 100 65 375 A1 ist eine Reinigungsvorrichtung mit einer Basisstation auf Rädern bekannt. Die Reinigungsvorrichtung weist eine Aufnahme an der Basisstation auf, in die eine handgehaltene Reinigungseinrichtung ablegbar ist. Beim Ablegen in der Aufnahme wird eine erste Wirkverbindung betätigt, die mit einer Blockiereinrichtung für ein oder mehrere Räder verbunden ist. Durch Ablegen oder Einstellen der Reinigungseinrichtung in die Aufnahme blockiert die Blockiervorrichtung die Räder oder gibt diese frei. Die Reinigungsvorrichtung hat den Nachteil, dass der Benutzer zum Weiterbewegen der Reinigungsvorrichtung entweder sein Reinigungsgerät in der Aufnahme komplett abstellen muss oder dass - für den Fall, dass die Blockiervorrichtung die Räder bei entnommenem Reinigungsgerät frei gibt - die Reinigungsvorrichtung während des kritischen Auswasch- und Trocknungsvorgangs nicht gegen Wegrollen gesichertist.

Die DE 198 09 331 C1 beschreibt eine Sammelvorrichtung mit einem Abfallsack, der in einer auf klappbaren Vorrichtung gehalten ist, wobei die Vorrichtung über einen Fußtrittschalter aufgeklappt wird. Über eine mechanische Kopplung wird durch Betätigung des Fußtrittschalters auch eine Bremsvorrichtung aktiviert, so dass die Sammelvorrichtung nur bei zusammengeklapptem Halter für den Abfallsack beweglich ist.

Diese Vorrichtung hat den Nachteil, dass zum einen über das Betätigen des Fußtrittschalters ein Kippmoment aufgebracht wird und zum anderen der Fußtrittschalter separat betätigt werden muss.

Der Erfindung liegt daher die Aufgabe zugrunde, eine Kombination eines Wischsystems mit einem Fahrgestell anzugeben, das - vorzugsweise automatisch - gegen Wegrollen gesichert ist, wenn der Benutzer sein Wischgerät auswäscht oder trocknet, und das ansonsten zur Erzielung einer leichten Handhabung frei beweglich ist.

Die Aufgabe wird durch eine Kombination eines Wischsystems mit einem Fahrgestell nach dem Anspruch 1 gelöst, das insbesondere dadurch gekennzeichnet ist, dass die Bremsvorrichtung derart ausgebildet ist, dass die Kraft (23) auf die Wischsystemaufnahme (3) aufbringbar ist und bei Belastung der Wischsystemaufnahme (3) mit dem Eimer (9) und der Trocknungsvorrichtung nicht in die Blockierstellung schaltet und bei zusätzlicher Belastung mit dem Gewicht eines Wischgeräts oder durch die Bestätigungskraft der Wischtuchpresse in die Blockierstellung schaltet.

Die erfindungsgemäße Kombination des Wischsystems mit dem Fahrgestell hat den besonderen Vorteil, dass das Fahrgestell während des Bodenreinigens frei beweglich ist und vom Benutzer ohne großen Kraftaufwand mitgeführt werden kann. Darüber hinaus hat es den besonderen Vorteil, dass sich das Fahrgestell insbesondere beim Trocknen des ausgewaschenen Wischbezugs automatisch gegen Wegrollen und damit gegen Umstürzen sichert. Der Benutzer muss hierfür keine weiteren Bedienhebel, wie zusätzliche Bremshebel oder Aufnahmen, die Bremshebel oder Bremsen betätigen, bedienen. Hierdurch wird erreicht, dass das Fahrgestell des erfindungsgemäßen Wischsystems besonders leicht zu handhaben ist, was insbesondere ein schnelles und effizientes Arbeiten ermöglicht.

In einer besonderen Ausgestaltungsform der erfindungsgemäßen Kombination des Wischsystems mit dem Fahrgestell ist vorgesehen, dass die Bremsvorrichtung von der Freigabestellung in die Blockierstellung schaltet, wenn die Kraft eine - vorzugsweise einstellbare - Schaltauslösekraft überschreitet. Darüber hinaus kann vorteilhafterweise vorgesehen sein, dass die Bremsvorrichtung von der Blockierstellung in die Freigabestellung schaltet, wenn die Kraft eine - vorzugsweise einstellbare - Schaltauslösekraft unterschreitet. Vorzugsweise befindet sich das Fahrgestell in der Freigabestellung, wenn die Kraft kleiner als eine - vorzugsweise einstellbare - Schaltauslösekraft ist. Die Schaltauslösekraft wird idealerweise so gewählt, dass durch das Gewicht eines mit Wasser gefüllten Eimers und das zusätzliche Gewicht einer Trocknungsvorrichtung die Bremsvorrichtung nicht in die Blockierstellung schaltet. Vielmehr ist vorzugsweise die Schaltauslösekraft derart einzustellen, dass die Bremsvorrichtung erst bei Betätigung einer Wischtuchpresse und/oder bei Belastung mit dem zusätzlichen Gewicht des Wischgeräts in die Blockierstellung schaltet.

Vorzugsweise weist das Fahrgestell zumindest ein Rad, vorzugsweise mindestens drei Räder, auf. Eines oder mehrere der Räder können beispielsweise als schwenkbare Lenkräder ausgebildet sein. Unter dem Begriff Räder werden auch Rollen, Walzen, drehbar gelagerte Kugeln oder Gleitknöpfe verstanden.

In einer vorteilhaften Ausführungsform weist die Bremsvorrichtung zumindest ein Bremselementbeispielsweise einen Bremsklotz - auf. Es kann vorteilhafterweise vorgesehen sein, dass das Bremselement zum Blockieren des Fahrgestells mit dem Boden auf dem Fahrgestell steht und/oder mit zumindest einem Rad des Fahrgestells in Kontakt tritt.

In einer vorteilhaften Ausführungsform ist das Bremselement an einem Hebelarm angeordnet. Vorzugsweise ist der Hebelarm durch Beaufschlagung der Wischsystemaufnahme mit der Kraft verschwenkbar.

In einer ganz besonders vorteilhaften Ausführungsform ist das Fahrgestell von der Freigabestellung in die Blockierstellung kippbar.

In einer besonderen Ausführungsform weist das Fahrgestell zumindest drei Räder auf, die eine Rollplattform definieren. Vorzugsweise steht das Fahrgestell in der Freigabestellung auf den Rädern der Rollplattform auf und kann so vom Benutzer frei über die zu reinigende Fläche gerollt werden. In einer weiteren vorteilhaften Ausführungsform weist das Fahrgestell eine Bremsplattform mit zumindest einem Bremselement - beispielsweise einem Bremsklotz - auf. Vorzugsweise ist vorgesehen, dass das Fahrgestell in der Blockierstellung auf der Bremsplattform bzw. Elementen der Bremsplattform aufsteht.

Es kann vorteilhafterweise vorgesehen sein, dass zumindest ein Rad - vorzugsweise zwei Rädersowohl Elemente der Rollplattform, als auch Elemente der Bremsplattform sind.

In einer ganz besonders kompakten und einfach zu realisierenden Ausführungsform kippt das Fahrgestell bei Beaufschlagung mit der Kraft - vorzugsweise über die Räder, die sowohl Elemente der Rollplattform als auch Elemente der Bremsplattform sind - von der Rollplattform auf die Bremsplattform. Diese Ausführungsvariante ermöglicht es auf besonders einfache Weise das Fahrgestell mitsamt dem Wischsystem von der Freigabestellung in die Blockierstellung zu überführen. Hierfür kann vorteilhafterweise vorgesehen sein, dass die Bremsplattform einen von 180 Grad verschiedenen Winkel zur Rollplattform aufweist.

In der Zeichnung ist der Erfindungsgegenstand schematisch dargestellt und wird anhand der Figuren nachfolgend beschrieben. Dabei zeigen:
- Fig. 1: ein Fahrgestell für die erfindungsgemäße Kombination mit einem Wischsystem in einer schematischen Darstellung in Freigabestellung,
- Fig. 2: das Fahrgestell nach Figur 1 in der Blockierstellung,
- Fig. 3: ein Fahrgestell einer anderen erfindungsgemäßen Kombination, und
- Fig. 4: das in Figur 3 dargestellte Fahrgestell in zusammengeklappter Stellung

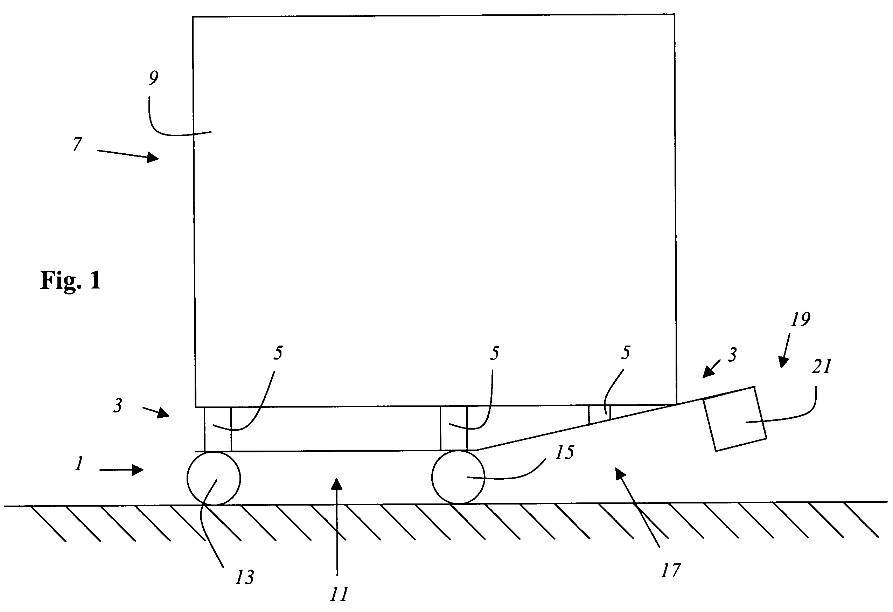

Fig. 1 zeigt das Fahrgestell 1 einer erfindungsgemäßen Kombination eines Wischsystems 7mit einem Fahrgestell, das eine Wischsystemaufnahme 3, die mehrere Aufnahmeklötze 5 beinhaltet aufweist. Auf den Aufnahmeklötzen 5 ruht ein Wischsystem 7 mit einem Eimer 9. Das Wischsystem 7 kann eine hier nicht gezeigte Wischtuchpresse beinhalten. Das Fahrgestell 1 weist eine Rollplattform 11 mit ersten Rädern 13 und zweiten Rädern 15 auf. Darüber hinaus weist das Fahrgestell eine Bremsplattform 17 mit einem Bremselement 19, das als Bremsklotz 21 ausgeführt ist, auf. In der gezeigten Freigabestellung steht das Fahrgestell 1 auf den Rädern 13,15 der Rollplattform 11 auf.

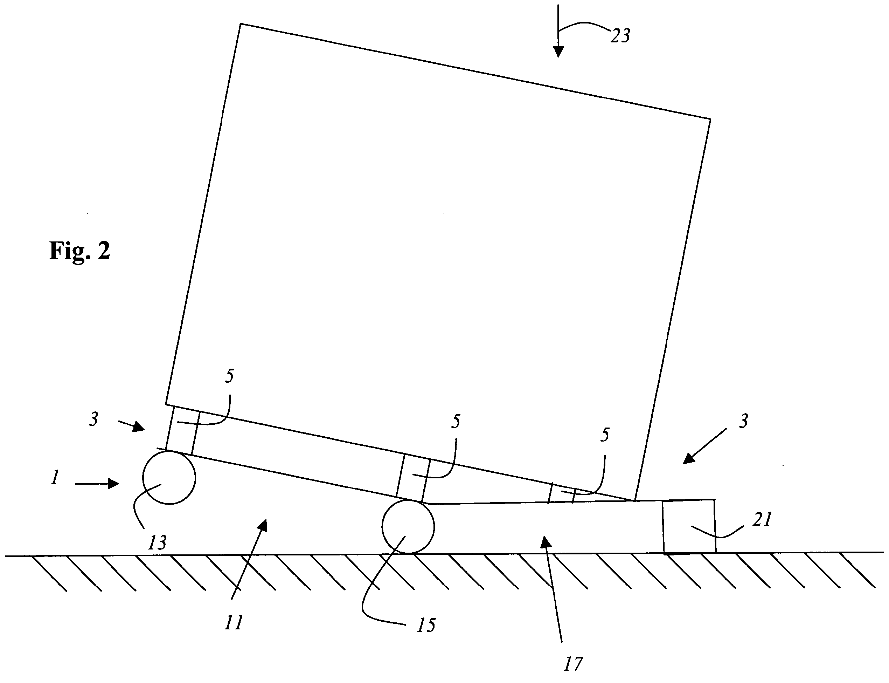

Figur 2 zeigt das Fahrgestell 1 eines erfindungsgemäßen Wischsystems 7 bei Beaufschlagung der Aufnahme 3 mit einer Kraft 23, die größer als die Schaltauslösekraft ist. Das Fahrgestell 1 ist durch die Beaufschlagung mit der Kraft 23 über die zweiten Rädern 15 auf die Bremsplattform 17 gekippt und somit in dieser Blockierstellung gegen Wegrollen gesichert.

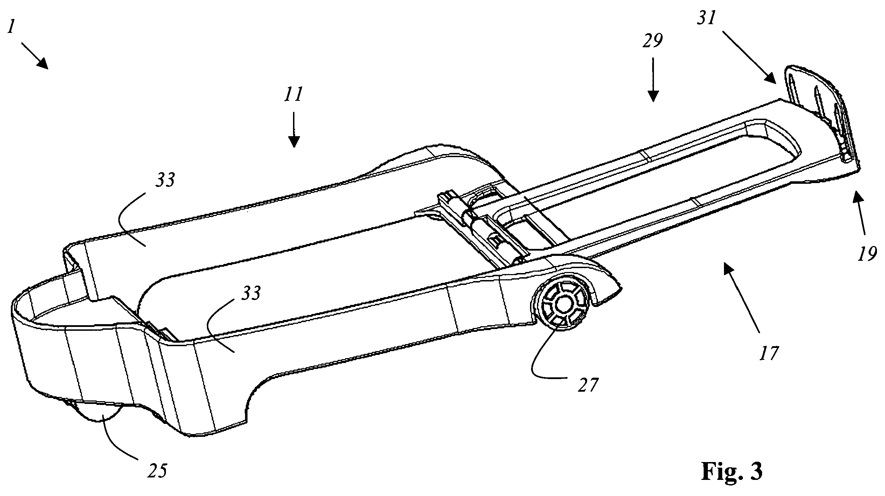

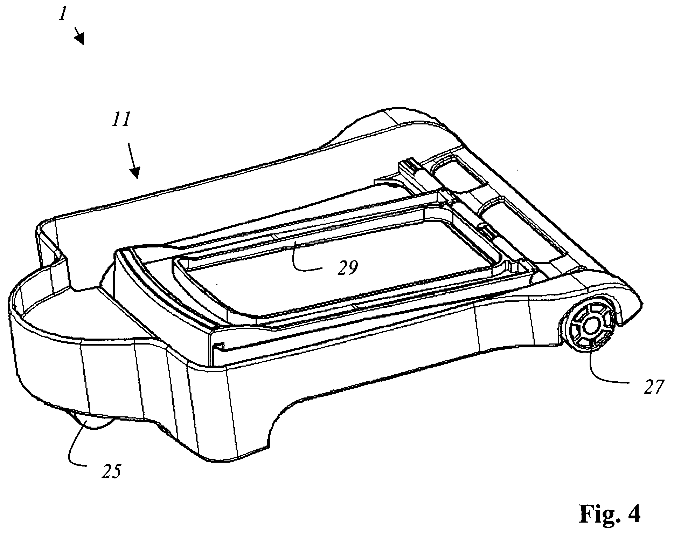

Figur 3 zeigt ein Fahrgestell 1 eines anderen erfindungsgemäßen Wischsystems 7 mit einer Rollplattform 11, die ein Lenkrad 25 und weitere Räder 27 aufweist. Das Bremselement 19 ist an einem Hebelarm 29 angeordnet, der die Bremsplattform 17 bildet. Der Hebelarm 29 ist gelenkig mit der Rollplattform 11 verbunden, so dass dieser eingeklappt werden, was in Figur 4 dargestellt ist. Das gezeigte Fahrgestell 1 ist hierdurch besonders gut verstaubar und kompakt. Die Wischsystemaufnahme 3 ist bei diesem Fahrgestell 1 durch eine Haltenut 31 und Haltewangen 33, in die ein Eimer 9 sicher eingestellt werden kann, gebildet. Bei Belastung des Fahrgestells 1 mit der Kraft kippt das Fahrgestell 1 über die weiteren Räder 27 von der Rollplattform 11 auf die Bremsplattform 17 und wieder zurück, wenn die Kraft verschwindet bzw. sich in der Höhe reduziert.

### Bezugszeichenliste:

- 1: Fahrgestell
- 3: Wischsystemaufnahme
- 5: Aufnahmeklotz
- 7: Wischsystem
- 9: Eimer
- 11: Rollplattform
- 13: Räder
- 15: Räder
- 17: Bremsplattform
- 19: Bremselement
- 21: Bremsklotz
- 23: Kraft
- 25: Lenkrad
- 27: Räder
- 29: Hebelarm
- 31: Haltenut
- 33: Haltewangen

## Patentansprüche

1. Kombination eines Wischsystems (7) mit einem Fahrgestell (1), das eine Wischsystemaufnahme (3) zur Aufnahme des Wischsystems (7) aufweist, wobei das Wischsystem (7) einen Eimer (9) und eine Trocknungsvorrichtung für Wischtücher oder Wischbezüge oder eine Wischtuchpresse aufweist und eine Bremsvorrichtung vorgesehen ist, die das Fahrgestell (1) infolge der Beaufschlagung mit einer Kraft (23) von einer Freigabestellung, in der das Fahrgestell (1) beweglich ist, in eine Blockierstellung, in der das Fahrgestell (1) blockiert und gegen Wegrollen gesichert ist, schaltet, **dadurch gekennzeichnet, dass** die Bremsvorrichtung derart ausgebildet ist, dass die Kraft (23) auf die Wischsystemaufnahme (3) aufbringbar ist und bei Belastung der Wischsystemaufnahme (3) mit dem Eimer (9) und der Trocknungsvorrichtung nicht in die Blockierstellung schaltet und bei zusätzlicher Belastung mit dem Gewicht eines Wischgeräts oder durch die Betätigungskraft der Wischtuchpresse in die Blockierstellung schaltet.

2. Kombination eines Wischsystems (7) mit einem Fahrgestell (1) nach Anspruch 1, **dadurch gekennzeichnet, dass** die Bremsvorrichtung von der Freigabestellung in die Blockierstellung schaltet, wenn die Kraft (23) eine, insbesondere einstellbare, Schaltauslösekraft unter- oder überschreitet.

3. Kombination eines Wischsystems (7) mit einem Fahrgestell (1) nach einem der Ansprüche 1 oder 2, **dadurch gekennzeichnet, dass** die Bremsvorrichtung zumindest ein, insbesondere als Bremsklotz (21) ausgebildetes Bremselement (19) aufweist.

4. Kombination eines Wischsystems (7) mit einem Fahrgestell (1) nach Anspruch 3, **dadurch gekennzeichnet, dass** das Bremselement (19) zum Blockieren des Fahrgestells (1) mit dem Boden auf dem Fahrgestell (1) steht und/oder mit zumindest einem Rad (13,15) des Fahrgestells (1) in Kontakt tritt.

5. Kombination eines Wischsystems (7) mit einem Fahrgestell (1) nach einem der Ansprüche 3 oder 4, **dadurch gekennzeichnet, dass** das Bremselement (19) an einem Hebelarm (29) angeordnet ist, der durch Beaufschlagung der Wischsystemaufnahme (3) mit der Kraft (23) verschwenkbar ist.

6. Kombination eines Wischsystems (7) mit einem Fahrgestell (1) nach einem der Ansprüche 1 bis 9, **dadurch gekennzeichnet, dass** das Fahrgestell (1) von der Freigabestellung in die Blockierstellung kippbar ist.

7. Kombination eines Wischsystems (7) mit einem Fahrgestell (1) nach einem der Ansprüche 1 bis 6, **dadurch gekennzeichnet, dass** das Fahrgestell (1) zumindest drei Räder (13,15) aufweist, die eine Rollplattform (11) definieren und das Fahrgestell (1) in der Freigabestellung auf den Rädern (13,15) der Rollplattform (11) aufsteht.

8. Kombination eines Wischsystems (7) mit einem Fahrgestell (1) nach einem der Ansprüche 1 bis 7, **dadurch gekennzeichnet, dass** das Fahrgestell (1) eine Bremsplattform (17) mit zumindest einem Bremselement (19), insbesondere einem Bremsklotz (21), aufweist und dass das Fahrgestell (1) in der Blockierstellung auf der Bremsplattform (17) bzw. Elementen der Bremsplattform (17) aufsteht.

9. Kombination eines Wischsystems (7) mit einem Fahrgestell (1) nach Anspruch 10, **dadurch gekennzeichnet, dass** zumindest ein Rad (13,15), insbesondere zwei Räder (13,15), sowohl Elemente der Rollplattform (11), als auch Elemente der Bremsplattform (17) sind.

10. Kombination eines Wischsystems (7) mit einem Fahrgestell (1) nach Anspruch 9, **dadurch gekennzeichnet, dass** das Fahrgestell (1) bei Beaufschlagung mit der Kraft (23), insbesondere über diejenigen Räder (13,15), die sowohl Elemente der Rollplattform (11) als auch Elemente der Bremsplattform (17) sind, von der Rollplattform (11) auf die Bremsplattform (17) kippt.

## Claims

1. Combination of a mopping system (7) with a chassis (1), comprising a mopping system receiver (3) for receiving the mopping system (7), wherein the mopping system (7) is envisaged to comprise a bucket (9) and a drying device for mopping cloths or mopping heads or a mopping cloth press and a brake device, which switches the chassis (1), moveable from a release position in which the chassis (1) is moveable into a blocked position, in which the chassis is blocked and secured against rolling away, due to applying a force (23), **characterised in that**
the brake device is designed in such a way that the force (23) can be applied to the mopping system receiver (3) and will not switch to the blocked position when a load is applied to the mopping system receiver (3) with the bucket (9) and the drying device, and then switches to the blocked position when an additional load is applied with the weight of the moping unit or by means of the activating force of the mopping cloth press.

2. Combination of a mopping system (7) with a chassis (1) according to claim 1, **characterised in that** the brake device switches from the release position to the blocked position when the force (23) does not reach or exceeds a switching trigger force, in particular one that can be set.

3. Combination of a mopping system (7) with a chassis (1) according to one of the claims 1 or 2, **characterised in that** the brake device comprises at least one brake element (19), in particular one designed as a brake shoe (21).

4. Combination of a mopping system (7) with a chassis (1) according to claim 3, **characterised in that** the brake element (19) stands on the chassis (1) and/or contacts at least one wheel (13, 15) of the chassis (1) for blocking the chassis (1).

5. Combination of a mopping system (7) with a chassis (1) according to one of the claims 3 or 4, **characterised in that** the brake element (19) is arranged on a lever arm (29) that can be pivoted by applying the force (23) to the mopping system receiver (3).

6. Combination of a mopping system (7) with a chassis (1) according to one of the claims 1 to 9, **characterised in that** the chassis (1) can be tilted from the release position into the blocked position.

7. Combination of a mopping system (7) with a chassis (1) according to one of the claims 1 to 6, **characterised in that** the chassis (1) comprises at least three wheels (13,15) that define a wheeled platform (11) and **in that** the chassis (1) stands on the wheels (13,15) of the wheeled platform (11) in the release position.

8. Combination of a mopping system (7) with a chassis (1) according to one of the claims 1 to 7, **characterised in that** the chassis (1) comprises a brake platform (17) with at least one brake element (19), in particular a brake shoe (21), and **in that** the chassis (1) stands on the brake platform (17) or the elements of the brake platform (17) in the blocked position.

9. Combination of a mopping system (7) with a chassis (1) according to claim 10, **characterised in that** at least one wheel (13,15), in particular two wheels (13,15), represent elements of the wheeled platform (11) as well as elements of the brake platform (17).

10. Combination of a mopping system (7) with a chassis (1) according to claim 9, **characterised in that** the chassis (1) tilts from the wheeled platform (11) onto the brake platform (17) when the force (23) is applied, in particular above those wheels (13,15) that represent elements of the wheeled platform (11) as well as elements of the brake platform (17) .

## Revendications

1. Combinaison d'un système d'essuyage (7) muni d'un châssis (1), comprenant un réceptacle de système d'essuyage (3) permettant de recevoir le système d'essuyage (7), où le système d'essuyage (7) comporte un seau (9) et un dispositif de séchage pour torchons ou serpillières ou bien une presse à torchons et un dispositif de freinage est prévu, qui commute le châssis (1) une fois sollicité par une force d'actionnement (23), depuis une position de libération, dans laquelle le châssis (1) est mobile, vers une position de blocage, dans laquelle le châssis (1) est bloqué et ne peut pas se dégager, **caractérisée en ce que** le dispositif de freinage est conçu de telle sorte que la force (23) peut être appliquée au réceptacle de système d'essuyage (3) et ne passe pas en position de blocage en cas de contrainte de la part du réceptacle de système d'essuyage (3) avec le seau (9) et le dispositif de séchage et passe en position de blocage lorsque la contrainte augmente avec le poids d'un appareil d'essuyage ou sous l'action exercée par la presse à torchons.

2. Combinaison d'un système d'essuyage (7) avec un châssis (1) selon la revendication 1, **caractérisée en ce que** le dispositif de freinage passe de la position de libération à la position de blocage lorsque la force (23) devient inférieure ou supérieure à une force de libération, en particulier une force de libération réglable.

3. Combinaison d'un système d'essuyage (7) avec un châssis (1) selon l'une des revendications 1 ou 2, **caractérisée en ce que** le dispositif de freinage présente au moins un élément de freinage (19), en particulier sous forme de sabot de freinage (21).

4. Combinaison d'un système d'essuyage (7) avec un châssis (1) selon la revendication 3, **caractérisée en ce que** l'élément de freinage (19) repose sur le châssis (1) pour bloquer le châssis (1) avec le sol et/ou vient au contact d'au moins une roue (13, 15) du châssis (1).

5. Combinaison d'un système d'essuyage (7) avec un châssis (1) selon l'une des revendications 3 ou 4, **caractérisée en ce que** l'élément de freinage (19) est prévu sur un bras de levier (29), bras qui est pivotant lorsque le réceptacle de système d'essuyage (3) est soumis à une force (23).

6. Combinaison d'un système d'essuyage (7) avec un châssis (1) selon l'une des revendications 1 à 9, **caractérisée en ce que** le châssis (1) est escamotable depuis la position de libération vers la position de blocage.

7. Combinaison d'un système d'essuyage (7) avec un châssis (1) selon l'une des revendications 1 à 6, **caractérisée en ce que** le châssis (1) présente au moins trois roues (13, 15), qui définissent une plate-forme de roulement (11) et le châssis (1) est en position de libération sur les roues (13, 15) de la plate-forme de roulement.

8. Combinaison d'un système d'essuyage (7) avec un châssis (1) selon l'une des revendications 1 à 7, **caractérisée en ce que** le châssis (1) présente une plate-forme de freinage (17) avec au moins un élément de freinage (19), en particulier un sabot de freinage (21) et que le châssis (1) repose en position de blocage sur la plate-forme de freinage (17) ou sur des éléments de la plate-forme de freinage (17).

9. Combinaison d'un système d'essuyage (7) avec un châssis (1) selon la revendication 10, **caractérisée en ce qu'**au moins une roue (13, 15), en particulier deux roues (13, 15), sont des éléments de la plate-forme de roulement (11) ainsi que des éléments de la plate-forme de freinage (17).

10. Combinaison d'un système d'essuyage (7) avec un châssis (1) selon la revendication 9, **caractérisée en ce que** le châssis (1) bascule de la plate-forme de roulement (11) à la plate-forme de freinage (17), en cas d'application de la force (23), en particulier par l'intermédiaire des roues (13, 15) qui constituent aussi bien des éléments de la plate-forme de roulement (11) que des éléments de la plate-forme de freinage (17).
